# EUROPÄISCHE PATENTANMELDUNG

(11) **EP 3 795 548 A1**
(43) Veröffentlichungstag der Anmeldung: **24.03.2021**
(21) Anmeldenummer: 19199056.3
(22) Anmeldetag: 23.09.2019
(51) Int. Cl.: C04B 14/18, C04B 20/06, C04B 26/26

(54) **GEBLÄHTES GRANULAT AUS MINERALISCHEM MATERIAL**

(71) Anmelder: Binder + Co AG, 8200 Gleisdorf (AT)
(72) Erfinder: Kremer, Hartmut, 9241 Wernberg (AT); Neubacher, Julian, 8010 Graz (AT)
(74) Vertreter: KLIMENT & HENHAPEL

(57) **Zusammenfassung**

Die Erfindung betrifft ein Verfahren zur Herstellung eines geblähten Granulats aus sandkornförmigem, mineralischem Material, welches ein gebundenes Treibmittel aufweist, beispielsweise eines geblähten Granulats aus Perlitsand,
wobei das sandkornförmige, mineralische Material
- in eine Aufgabeöffnung an einem Ende eines Ofenschachts eingebracht wird,
- in einer Förderrichtung entlang einer Wärmebehandlungsstrecke, vorzugsweise durch Schwerkraft, befördert wird,
- während des Beförderns durch die Wärmebehandlungsstrecke auf eine kritische Temperatur erhitzt wird, ab welcher das sandkornförmige, mineralische Material plastisch wird und aufgrund des Treibmittels zu blähen beginnt,
- und das geblähte Granulat an einem anderen Ende des Ofenschachts ausgetragen wird.

Um das geblähte Granulat vielseitig einsetzbar zu machen, ist erfindungsgemäß vorgesehen, dass
das sandkornförmige, mineralische Material nach dem Erhitzen auf die kritische Temperatur auf eine zweite Temperatur oberhalb der kritischen Temperatur erhitzt wird, welche zweite Temperatur unterhalb einer dritten Temperatur liegt, ab welcher dritten Temperatur die Oberfläche des geblähten Granulats aufplatzt und wobei die zweite Temperatur in Abhängigkeit von einer gewünschten Dichte des geblähten Granulats gewählt wird.

## Beschreibung

### GEBIET DER ERFINDUNG

Die Erfindung betrifft ein Verfahren zur Herstellung eines geblähten Granulats aus sandkornförmigem, mineralischem Material, welches ein gebundenes Treibmittel aufweist, beispielsweise eines geblähten Granulats aus Perlitsand, wobei das sandkornförmige, mineralische Material in eine Aufgabeöffnung an einem Ende eines Ofenschachts eingebracht wird, in einer Förderrichtung entlang einer Wärmebehandlungsstrecke, vorzugsweise durch Schwerkraft, befördert wird, während des Beförderns durch die Wärmebehandlungsstrecke auf eine kritische Temperatur erhitzt wird, ab welcher das sandkornförmige, mineralische Material plastisch wird und aufgrund des Treibmittels zu blähen beginnt und das geblähte Granulat an einem anderen Ende des Ofenschachts ausgetragen wird.

Weiters bezieht sich die Erfindung auf geblähtes Granulat aus sandkornförmigem, mineralischem Material, beispielsweise geblähtes Granulat aus Perlitsand, sowie die Verwendung des geblähten Granulats als mineralischer Füllstoff in einem Bitumenprodukt.

### STAND DER TECHNIK

Leichtstoffe sind im Bauwesen gefragte Ausgangsmaterialien für diverse Anwendungen wie der Isoliertechnik und Fertigputzindustrie. Die Leichtstoffe unterteilen sich prinzipiell in erdölbasierte und mineralische Materialien.

Erdölbasierte Materialien zeichnen sich zwar durch einen gut erforschten Herstellungsprozess aus, haben allerdings den Nachteil der Brennbarkeit.

Dem gegenüber sind mineralische Materialien, bei denen es sich hauptsächlich um (kristall-)wasserhaltige Gesteine, wie beispielsweise Perlit, Obsidian u.ä., in Granulatform handelt, nicht entflammbar. Allerdings ist der Herstellungsprozess deutlich schlechter erforscht als jener erdölbasierter Materialien. Speziell hinsichtlich der erzielbaren Qualitäten scheint der Herstellungsprozess noch eine Menge Entwicklungspotential zu haben.

Aus dem Stand der Technik sind seit langem Öfen bekannt, in welchen heiße Verbrennungsluft von unten nach oben durch ein vertikal angeordnetes Rohr geblasen wird. Das zu blähende sandkornförmige, mineralische Material wird dabei im heißen Abgas im Gegenstrom deutlich über eine kritische Temperatur, die in der Regel zwischen 750°C und 800°C, in seltenen Fällen auch über 800°C, angesiedelt ist, erhitzt, ab welcher das sandkornförmige, mineralische Material plastisch wird und das im sandkornförmigen, mineralischen Material gebundene Wasser verdampft. Mit dem Verdampfungsvorgang geht die Blähung des sandkornförmigen, mineralischen Materials einher.

Großer Nachteil dieser Öfen ist, dass der Blähvorgang des sandkornförmigen, mineralischen Materials größenteils unkontrolliert abläuft - d.h. dass das sandkornförmige, mineralische Material sehr schnell und deutlich über die kritische Temperatur erhitzt wird, sodass die Oberfläche des geblähten Granulats aufplatzt. Dadurch entsteht ein offenzelliges, sehr leichtes, fragiles, aber auch stark hygroskopisches Granulat. Immer dort, wo dieses offenzellig geblähte Granulat mit anderen Komponenten zu einem Verbundmaterial vermischt wird, kommt es zu Abrieb, welcher das Volumen und insbesondere das Hohlraumvolumen des offenzellig geblähten Granulats und damit die gewünschte erleichternde und dämmende Wirkung reduziert. Speziell in der Isoliertechnik und in der Fertigputzindustrie erweist sich auch die stark hygroskopische Wirkung des geblähten Granulats als besonders negativ, da dieses Feuchtigkeit anzieht und speichert. Um der Hygroskopie zu begegnen, ist eine nachgeschaltete Imprägnierung mit Silikon notwendig. Dies bedeutet jedoch eine teuren, zusätzlichen Verfahrensschritt verbunden mit dem Nachteil der Brennbarkeit von Silikon ab ca. 200°C.

Um die oben genannten Nachteile zu verhindern, wird in der EP 2697181 B1 ein Verfahren für das Blähen von sandkornförmigen, mineralischen Material vorgeschlagen, mit welchem sichergestellt werden kann, dass das geblähte Granulat über eine größtenteils geschlossenzellige Oberfläche verfügt, sodass dieses keine bzw. kaum Hygroskopie aufweist.

Das dort beschriebene Verfahren macht sich die Feststellung zu Nutze, dass der Blähvorgang ein isenthalper Prozess ist. Die mit dem isenthalpen Blähvorgang einhergehende Abkühlung des Granulats wird detektiert und die Temperatur wird entlang einer verbleibenden Fallstrecke des geblähten Granulats gezielt reduziert, sodass es zu keinem weiteren Blähvorgang kommt.

Wenngleich das durch dieses Verfahren geblähte Granulat eine hohe Qualität und nicht hygroskopische Eigenschaften aufweist, sind bestimmte Anwendungsgebiete wegen unpassender physikalischer Eigenschaften dennoch ausgeschlossen.

### AUFGABE DER ERFINDUNG

Der vorliegenden Erfindung liegt daher die Aufgabe zugrunde, ein geblähtes Granulat aus mineralischem Material zur Verfügung zu stellen, das die erwähnten Nachteile des Stands der Technik überwindet. Insbesondere soll das geblähte Granulat vielseitig einsetzbar sein.

### DARSTELLUNG DER ERFINDUNG

Diese Aufgabe wird bei einem Verfahren zur Herstellung eines geblähten Granulats aus sandkornförmigem, mineralischem Material, welches ein gebundenes Treibmittel aufweist, beispielsweise eines geblähten Granulats aus Perlitsand, wobei das sandkornförmige, mineralische Material
- in eine Aufgabenöffnung an einem Ende eines Ofenschachts eingebracht wird,
- in einer Förderrichtung entlang einer Wärmebehandlungsstrecke, vorzugsweise durch Schwerkraft, befördert wird,
- während des Beförderns durch die Wärmebehandlungsstrecke auf eine kritische Temperatur erhitzt wird, ab welcher das sandkornförmige, mineralische Material plastisch wird und aufgrund des Treibmittels zu blähen beginnt,
- und das geblähte Granulat an einem anderen Ende des Ofenschachts ausgetragen wird,
erfindungsgemäß dadurch gelöst, dass das sandkornförmige, mineralische Material nach dem Erhitzen auf die kritische Temperatur auf eine zweite Temperatur oberhalb der kritischen Temperatur erhitzt wird, welche zweite Temperatur unterhalb einer dritten Temperatur liegt, ab welcher dritten Temperatur die Oberfläche des geblähten Granulats aufplatzt und wobei die zweite Temperatur in Abhängigkeit von einer gewünschten Dichte des geblähten Granulats gewählt wird.

Es hat sich herausgestellt, dass, anders als aus dem Stand der Technik bekannt und angenommen, oberhalb der kritischen Temperatur ein Temperaturbereich existiert, innerhalb dessen die Expansion des sandkornförmigen, mineralischen Materials durch Wahl einer zweiten Temperatur, auf welche das sandkornförmige, mineralische Material erhitzt wird, in definierten Grenzen steuerbar ist, ohne dass es zu einem Aufplatzen der Oberfläche des geblähten Granulats kommt.

Wenn in diesem Zusammenhang vom Aufplatzen der Oberfläche gesprochen wird, so ist anzumerken, dass im Sinne der Erfindung eine Oberfläche eines geblähten Granulats dann nicht als aufgeplatzt und somit geschlossenzellig angesehen wird, wenn weniger als 15%, bevorzugt weniger als 10%, besonders bevorzugt weniger als 5%, der Oberfläche des geblähten Granulats aufgeplatzt ist und die restliche Oberfläche glatt ist.

Derart geringfügig aufgeplatzte Oberflächen bewirken immer noch geringste oder völlig fehlende Hygroskopie sowie eine ausgeprägte mechanische Stabilität des geblähten Granulats.

Wie sich ebenfalls herausgestellt hat, ermöglicht es die kontrollierte Expansion des sandkornförmigen, mineralischen Materials, die Dichte [kg/m³] bzw. einen Blähfaktor des geblähten Granulats für in der Praxis relevante Anwendungsfelder einzustellen. Mit anderen Worten kann durch entsprechende Wahl der zweiten Temperatur ein geblähtes Granulat mit unterschiedlichen Dichten und damit unterschiedlichen Festigkeiten hergestellt werden, die allesamt dennoch geschlossene Oberflächen aufweisen, mechanisch stabil und damit nicht hygroskopisch sind.

Unter dem Begriff Blähfaktor ist das Verhältnis des Volumens des sandkornförmigen, mineralischen Materials vor dem Blähvorgang zum Volumen des Granulats nach dem Blähvorgang zu verstehen. Je "näher" die zweite Temperatur bei der kritischen Temperatur liegt, desto "weniger" wird das sandkornförmige, mineralische Material gebläht, d.h. umso geringer ist der Blähfaktor des Granulats. Hierbei steht ein Teil des Treibmittels nicht für den Blähvorgang zur Verfügung, da dieses in gebundener Form im Granulat verbleibt. Bei Erhöhung der zweiten Temperatur erhöht sich auch der Blähfaktor des Granulats. Je "näher" die zweite Temperatur bei der dritten Temperatur liegt, desto mehr Treibmittel steht für den Blähvorgang zur Verfügung - d.h. umso weniger Treibmittel verbleibt im Granulat in gebundener Form.

D.h. durch die Wahl der zweiten Temperatur wird der Blähvorgang gesteuert, wodurch sich die Dichte des geblähten Granulats gezielt einstellen lässt. Je niedriger die zweite Temperatur gewählt wird, desto höher ist die Dichte des geblähten Granulats. Je höher die zweite Temperatur gewählt wird, desto geringer ist die Dichte des geblähten Granulats. Da die Dichte proportional zur mechanischen Festigkeit ist, ist bei geringerer Dichte des geblähten Granulats auch die mechanische Festigkeit des geblähten Granulats geringer, während bei höherer Dichte des geblähten Granulats die mechanische Festigkeit des geblähten Granulats höher ist. Für jegliche praktische Anwendung des geblähten Granulats kann somit stets diejenige Festigkeit gewählt werden, bei der die mechanische Festigkeit gerade ausreicht. Damit ist gewährleistet, dass das geblähte Granulat genauso stabil wie nötig, aber gleichzeitig so leicht wie möglich ist. Das geblähte Granulat ist also vielseitig einsetzbar und kann mit Hilfe des erfindungsgemäßen Verfahrens an den jeweiligen Anwendungsfall so angepasst werden, dass die Lösung besonders effizient ist.

In einer besonders bevorzugten Ausführungsform der Erfindung läuft das Verfahren wie folgt ab:
Das sandkornförmige, mineralische Material wird während des Beförderns durch die Wärmebehandlungsstrecke zuerst auf die kritische Temperatur und anschließend auf die zweite Temperatur erhitzt. Ab der kritischen Temperatur wird das sandkornförmige, mineralische Material, welches zahlreiche Körner, die jeweils ein Gefüge und eine Oberfläche aufweisen, umfasst, plastisch - d.h. das sandkornförmige, mineralische Material wird weich.

Aufgrund des Treibmittels beginnt die Mehrheit des sandkornförmigen, mineralischen Materials bei der kritischen Temperatur zu blähen. Unter "Mehrheit" wird in diesem Zusammenhang verstanden, dass mehr als 80%, bevorzugt mehr als 90%, besonders bevorzugt mehr als 95%, des aufgegebenen sandkornförmigen, mineralischen Materials zu blähen beginnt.

Da nicht alle Körner des aufgegebenen sandkornförmigen, mineralischen Materials gleiche physikalische und chemische Kenngrößen aufweisen, kann nicht gänzlich vermieden werden, dass bei einer gewissen Anzahl an Körnern die Plastifizierung und damit der Blähvorgang erst später einsetzt als bei der Mehrheit der Körner. Aus diesem Grund ist es von Vorteil, wenn das aufgegebene sandkornförmige, mineralische Material Körner mit möglichst identischen Eigenschaften aufweist, so dass die Erwärmung des sandkornförmigen, mineralischen Materials bei der Durchführung des erfindungsgemäßen Verfahrens bei allen Körnen, zumindest aber bei der Mehrheit der Körner das gleiche Verhalten bewirkt.

Die zweite Temperatur liegt in einem Bereich zwischen der kritischen Temperatur und der dritten Temperatur, wobei bei der dritten Temperatur die Oberfläche des Granulats aufplatzt. Im Bereich zwischen der kritischen Temperatur und der dritten Temperatur bläht das sandkornförmige, mineralische Material weitestgehend, ohne aufzuplatzen.

Das Gefüge und die Oberflächen des sandkornförmigen, mineralischen Materials besitzen eine temperaturabhängige Viskosität. Bei höherer Temperatur sind die Oberflächen und die Körper des sandkornförmigen, mineralischen Materials weniger viskos, weshalb das sandkornförmige, mineralische Material durch das verdampfende Treibmittel stärker gebläht wird. Unterhalb der kritischen Temperatur ist die Viskosität so hoch, dass die Oberflächen und die Körper des sandkornförmigen, mineralischen Materials nicht plastisch werden und es zu keinem Blähvorgang kommt. Oberhalb der dritten Temperatur ist die Viskosität der Körper und der Oberflächen wiederum derart niedrig, andererseits der Verdampfungsdruck des Treibmittels derart hoch, dass die Oberflächen des geblähten Granulats im Zuge des Blähvorgangs aufplatzen. D.h. über die Höhe der zweiten Temperatur wird die Viskosität des Granulats, der Blähvorgang und in weiterer Folge die Dichte und die mechanische Festigkeit des geblähten Granulats eingestellt.

Wie bereits oben ausgeführt, hat sich herausgestellt, dass durch die Höhe der zweiten Temperatur der Blähfaktor bzw. die Dichte des geblähten Granulats gezielt einstellbar ist und zwar derart, dass die Höhe der zweiten Temperatur umgekehrt proportional zur Dichte des geblähten Granulats ist, d.h.je niedriger die zweite Temperatur gewählt wird, desto höher ist die Dichte des geblähten Granulats und umgekehrt. Wie bereits oben geschrieben, ist die Dichte proportional zur mechanischen Festigkeit. Somit ist bei geringerer Dichte des geblähten Granulats auch die mechanische Festigkeit des geblähten Granulats geringer, während bei höherer Dichte des geblähten Granulats die mechanische Festigkeit des geblähten Granulats höher ist. Für jegliche praktische Anwendung des geblähten Granulats kann somit stets diejenige Festigkeit gewählt werden, bei der die mechanische Festigkeit gerade ausreicht.

Damit ist gewährleistet, dass das geblähte Granulat nicht nur die mit einem geschlossenzelligen Aufbau einhergehenden Vorteile besitzt, sondern darüberhinaus genauso stabil wie nötig, aber gleichzeitig so leicht wie möglich ist. Das geblähte Granulat ist also vielseitig einsetzbar und kann mit Hilfe des erfindungsgemäßen Verfahrens an den jeweiligen Anwendungsfall so angepasst werden, dass die Lösung besonders effizient ist.

Die Körner des geblähten Granulats mit geschlossenzelliger Oberfläche sind idealerweise kugelförmig ausgebildet, können aber auch Eiform, Kartoffelform oder die Form mehrerer miteinander verbundener Entitäten - ähnlich mehrerer miteinander verbundener Seifenblasen - haben.

Das Treibmittel ist, mehr oder weniger gleichmäßig, innerhalb des Volumens der Körner des Granulats gebunden. Im Zuge des Blähvorgangs können sich - abhängig von einer Verteilung des Treibmittels - innerhalb eines Korns mehrere geblähte Zellen bilden, die sich nicht voneinander abspalten, wodurch mehrere miteinander verbundene Entitäten entstehen.

In einer alternativen Ausführungsform des erfindungsgemäßen Verfahrens ist es vorgesehen, dass das sandkornförmige, mineralische Material nach dem Einbringen in den Ofenschacht zur Vorbereitung auf den Blähvorgang zunächst auf eine unterhalb der kritischen Temperatur liegende Vorwärmtemperatur vorgewärmt wird, vorzugsweise höchstens auf 750°C vorgewärmt wird.
Je nach Ausgangsmaterial in Form von sandkornförmigem, mineralischem Material ist es nicht erforderlich, dass im Zuge des Vorwärmens die 750°C auch tatsächlich erreicht werden. Wesentlich ist nur, dass die 750°C nicht überschritten werden, wobei auch, in Abhängigkeit der Korngröße des Ausgangsmaterials, die 750°C deutlich unterschritten werden können. So kann die Vorwärmtemperatur beispielsweise auch im Bereich zwischen 500°C und 650°C liegen.

Die Vorerwärmung dient dazu, das sandkornförmige, mineralische Material vor dem Blähvorgang bis in ein Innerstes langsam zu durchwärmen. Durch das Aufheizen auf die Vorwärmtemperatur werden alle Schichten des sandkornförmigen, mineralischen Materials - ausgehend von einer Oberfläche bis hin zu einem Kern - langsam und nicht schockartig erwärmt.

Es soll gewährleistet werden, dass sich durch die Vorwärmung ein möglichst einheitliches Temperaturprofil innerhalb der Schichten des sandkornförmigen, mineralischen Materials ausbildet. Durch Begrenzung der Vorwärmtemperatur wird verhindert, dass bei zu rascher Aufheizung auf die kritische Temperatur äußere, oberflächennahe Schichten bereits blähen und eine Isolationsschicht bilden, bevor der Kern erwärmt ist. Weiters dient die Begrenzung der Vorwärmtemperatur dazu, zu verhindern, dass das Treibmittel so großen Druck entfaltet, dass das sandkornförmige, mineralische Material unkontrolliert expandiert, wodurch die Oberfläche aufplatzt.

In einer alternativen Ausführungsform des erfindungsgemäßen Verfahrens ist es vorgesehen, dass eine Dauer bis zur Erreichung der Vorwärmtemperatur zwischen 0,5 und 1,5 Sekunden, vorzugsweise zwischen 0,5 und 2 Sekunden, besonders bevorzugt zwischen 0,5 und 3 Sekunden, beträgt.

Wie bereits oben ausgeführt, wird es als wesentlich erachtet, dass das Ausgangsmaterial im Ofenschacht langsam vorgewärmt wird und nicht schockartig erhitzt wird. Neben der Begrenzung der Vorwärmtemperatur ist es daher auch erforderlich die Wärmezufuhr im Ofenschacht derart zu regeln, dass die Vorwärmtemperatur (nicht zwingend die maximale Vorwärmtemperatur) unter den verfahrenstechnischen Randbedingung (zur Verfügung stehenden Förderstrecke) möglichst langsam erreicht wird.

Der Temperaturanstieg bis zum Erreichen der Vorwärmtemperatur erfolgt bevorzugt linear. Es ist allerdings auch vorstellbar, dass der Temperaturanstieg bis zum Erreichen der Vorwärmtemperatur exponentiell oder beschränkt erfolgt.

In einer bevorzugten Ausführungsform des erfindungsgemäßen Verfahrens ist es vorgesehen, dass die Wärmebehandlungsstrecke Heizelemente zur Abgabe von Wärme an das sandkornförmige, mineralische Material aufweist, wobei die Ansteuerung von innerhalb von zumindest 1m, bevorzugt innerhalb von zumindest 2,5m, besonders bevorzugt von innerhalb von zumindest 4m, gemessen ab der Aufgabeöffnung, angeordneten Heizelementen mit einer Anspeisetemperatur von höchstens 750°C erfolgt.

Dadurch kann der Beginn des Blähvorgangs im Ofenschacht, je nach Ausgangsmaterial und einzustellender Dichte, möglichst weit nach unten verschoben werden. Je weiter der Beginn des Blähvorgangs nach unten verschoben wird, desto länger und gleichmäßiger ist die Vorwärmung. Sicherzustellen ist aber jedenfalls, dass die verbleibende Förderstrecke ausreicht, um die zweite Temperatur und damit die gewünschte Dichte zu erreichen.

So kann bei entsprechend leichtem Ausgangsmaterial ausreichend sein, lediglich die innerhalb 1m nach der Aufgabeöffnung angeordneten Heizelemente mit einer Anspeisetemperatur von höchstens 750 anzusteuern, da dies für die langsame, gleichmäßige Erwärmung ausreichend sein kann. Bei schwererem Ausgangsmaterial hingegen kann es erforderlich sein, alle innerhalb von 4m nach der Aufgabeöffnung angeordneten Heizelemente mit einer Anspeisetemperatur von höchsten 750°C anzusteuern, da in diesem Fall die gleichmäßige, durchgehende Erwärmung einer längeren Fallstrecke bedarf.

In einer alternativen Ausführungsform des erfindungsgemäßen Verfahrens ist es vorgesehen, dass die Ansteuerung der in Förderrichtung nach den mittels Anspeisetemperatur angesteuerten Heizelementen liegenden Heizelemte mit einer Temperatur erfolgt, die über der Anspeisetemperatur liegt, vorzugsweise zwischen 800°C und 1100°C. Dadurch ist sichergestellt, dass zumindest die kritische Temperatur erreicht wird, sodass es zu einem Blähvorgang kommt.

In einer alternativen Ausführungsform des erfindungsgemäßen Verfahrens ist es vorgesehen, dass die zweite Temperatur in einem Bereich zwischen der kritischen Temperatur und der 1,5fachen oder der1,4fachen oder der 1,3fachen oder der 1,2fachen oder der 1,lfachen kritischen Temperatur, liegt. D.h. je nach Rohstoffbeschaffenheit und Ausgangskorngröße übersteigt die zweite Temperatur das 1,5fache der kritischen Temperatur nicht. Durch Wahl der zweiten Temperatur, die jedenfalls unter der dritten Temperatur liegt, wird sichergestellt, dass - abhängig vom Ausgangsmaterial - mehr als 85%, bevorzugt mehr als 90%, besonders bevorzugt mehr als 95%, des geblähten Granulats nach dem Blähvorgang bei der zweiten Temperatur eine geschlossenzellige, nicht aufgeplatzte Oberfläche aufweist.

In einer alternativen Ausführungsform des erfindungsgemäßen Verfahrens ist es vorgesehen, dass die erste Temperatur und/oder die kritische Temperatur und/oder die dritte Temperatur für eine bestimmte Sorte des Ausgangsmaterials vor Einbringung in den Ofenschacht experimentell ermittelt wird, wobei die erste und/oder die kritische Temperatur zum Beispiel mit Hilfe eines Versuchsofens, vorzugsweise mit Hilfe eines Muffelofens, ermittelt werden. D.h. die Ermittlung der entsprechenden Temperaturen erfolgt - insbesondere bei unbekannten Ausgangsmaterialien - experimentell zeitlich noch vor dem Einbringen des Granulats in den Ofenschacht. Hierfür wird unter anderem der Feuchtegehalt des Granulats und dessen Masseabnahme beim Trocknen bestimmt. Bei ähnlichen Ausgangsmaterialien (Rohsandtyp- und körnung) ist eine erneute Ermittlung allerdings nicht erforderlich.

Abhängig von einer Materialklasse des sandkornförmigen, mineralischen Materials, von einer Ausgangskorngröße des sandkornförmigen, mineralischen Materials und von der Masse des Treibmittels werden dann die erste Temperatur und/oder die kritische Temperatur und/oder die dritte Temperatur bestimmt. In Abhängigkeit von der gewünschten zu erzielenden Dichte wird dann die zweite Temperatur gewählt.

In einer alternativen Ausführungsform des erfindungsgemäßen Verfahrens ist es vorgesehen, dass das Treibmittel Wasser umfasst, welches Wasser im sandkornförmigen, mineralischen Material gebunden ist.

Wie bereits oben geschrieben, wird das sandkornförmige, mineralische Material bei der kritischen Temperatur plastisch, wobei das verdampfende wasserhaltige Treibmittel Druck auf das sandkornförmige, mineralische Material, insbesondere auf die Oberfläche des sandkornförmigen, mineralischen Materials ausübt, wodurch es zum Blähvorgang kommt.

In einer alternativen Ausführungsform des erfindungsgemäßen Verfahrens ist es vorgesehen, dass nach Erreichen der zweiten Temperatur, die Wärmezufuhr zum geblähten Granulat derart geregelt wird, dass sich die Temperatur des geblähten Granulats nicht weiter erhöht. Dadurch wird ein weiterer Blähvorgang verhindert, ein Aufreißen des geblähten Granulats wird unterbunden und der durch die zweite Temperatur eingestellte Blähfaktor kann gehalten werden. Somit weist ein Großteil - d.h. mehr als 85%, bevorzugt mehr als 90%, besonders bevorzugt mehr als 95% - des geblähten Granulats am anderen Ende des Ofenschachts eine geschlossenzellige Oberfläche und eine gezielt durch die zweite Temperatur eingestellte Dichte auf. Das geblähte Granulat zeichnet sich sodann durch eine fehlende bzw. für die Praxis wenig negative Hygroskopie und hohe mechanische Stabilität aus.

Bevorzugt wird die Heizleistung der Heizelemente in den Heizzonen in der nach dem Blähvorgang verbleibenden Wärmebehandlungsstrecke sukzessive verringert. D.h. nach dem Erreichen der zweiten Temperatur sinkt die Temperatur des geblähten Granulats ab.

Es wäre vorstellbar, dass die zweite Temperatur erst in einem Bereich der Wärmebehandlungsstrecke erreicht wird, welcher Bereich nahe am anderen Ende des Ofenschachts ist. Dies hat den Vorteil, dass die Anzahl von in Förderrichtung gesehen hinter diesem Bereich liegenden Heizelemente gering gehalten werden kann.

Sofern der Blähvorgang in einem Bereich der Wärmebehandlungsstrecke stattfindet, welcher Bereich nicht nahe am anderen Ende des Ofenschachts ist, sondern beispielsweise in einem mittleren Abschnitt des Ofenschachts, wäre es auch vorstellbar, dass die Leistung der in Förderrichtung hinter dem Bereich, in welchem die zweite Temperatur erreicht wird, liegenden Heizelemente auf Null gesetzt wird.

Dadurch wird sichergestellt, dass es nach diesem Bereich zu keinem weiteren Blähvorgang kommt und das geblähte Granulat, welches eine im Wesentlichen geschlossenzellige Oberfläche aufweist, nicht aufplatzt.

Erfindungsgemäß kann das geblähte Granulat als mineralischer Füllstoff in einem Bitumenprodukt verwendet werden. Hierbei handelt es sich um ein besonders bevorzugtes Einsatzgebiet des geblähten Granulats mit geschlossenzelliger Oberfläche und gezielt eingestellter Dichte. Durch die Verwendung des geblähten Granulats kann nämlich das Gewicht des Bitumenprodukts optimiert werden, ohne die Abdichtwirkung des Bitumenprodukts negativ zu beeinflussen.

## Patentansprüche

1. Verfahren zur Herstellung eines geblähten Granulats aus sandkornförmigem, mineralischem Material, welches ein gebundenes Treibmittel aufweist, beispielsweise eines geblähten Granulats aus Perlitsand, wobei das sandkornförmige, mineralische Material
- in eine Aufgabeöffnung an einem Ende eines Ofenschachts eingebracht wird,
- in einer Förderrichtung entlang einer Wärmebehandlungsstrecke, vorzugsweise durch Schwerkraft, befördert wird,
- während des Beförderns durch die Wärmebehandlungsstrecke auf eine kritische Temperatur erhitzt wird, ab welcher das sandkornförmige, mineralische Material plastisch wird und aufgrund des Treibmittels zu blähen beginnt,
- und das geblähte Granulat an einem anderen Ende des Ofenschachts ausgetragen wird,
**dadurch gekennzeichnet, dass**
das sandkornförmige, mineralische Material nach dem Erhitzen auf die kritische Temperatur auf eine zweite Temperatur oberhalb der kritischen Temperatur erhitzt wird, welche zweite Temperatur unterhalb einer dritten Temperatur liegt, ab welcher dritten Temperatur die Oberfläche des geblähten Granulats aufplatzt und wobei die zweite Temperatur in Abhängigkeit von einer gewünschten Dichte des geblähten Granulats gewählt wird.

2. Verfahren nach Anspruch 1, **dadurch gekennzeichnet, dass** das sandkornförmige, mineralische Material nach dem Einbringen in den Ofenschacht zur Vorbereitung auf den Blähvorgang zunächst auf eine unterhalb der kritischen Temperatur liegende Vorwärmtemperatur vorgewärmt wird, vorzugsweise höchstens auf 750°C vorgewärmt wird.

3. Verfahren nach Anspruch 2, **dadurch gekennzeichnet, dass** eine Dauer bis zur Erreichung der Vorwärmtemperatur zwischen 0,5 und 1,5 Sekunden, vorzugsweise zwischen 0,5 und 2 Sekunden, besonders bevorzugt zwischen 0,5 und 3 Sekunden, beträgt.

4. Verfahren nach Anspruch 1, wobei die Wärmebehandlungsstrecke Heizelemente zur Abgabe von Wärme an das sandkornförmige, mineralische Material aufweist, **dadurch gekennzeichnet, dass** die Ansteuerung von innerhalb von zumindest 1m, bevorzugt innerhalb von zumindest 2,5m, besonders bevorzugt von innerhalb von zumindest 4m, gemessen ab der Aufgabeöffnung, angeordneten Heizelementen mit einer Anspeisetemperatur von höchstens 750°C erfolgt.

5. Verfahren nach Anspruch 4, **dadurch gekennzeichnet, dass** die Ansteuerung der in Förderrichtung nach den mittels Anspeisetemperatur angesteuerten Heizelementen liegenden Heizelementen mit einer Temperatur erfolgt, die über der Anspeisetemperatur liegt, vorzugsweise zwischen 800°C und 1100°C.

6. Verfahren nach einem der Ansprüche 1 bis 5, **dadurch gekennzeichnet, dass** die zweite Temperatur in einem Bereich zwischen der kritischen Temperatur und der 1,5fachen oder der 1,4fachen oder der 1,3fachen oder der 1,2fachen oder der 1,lfachen kritischen Temperatur, liegt.

7. Verfahren nach einem der Ansprüche 1 bis 6, **dadurch gekennzeichnet, dass** die erste Temperatur und/oder die kritische Temperatur und/oder die dritte Temperatur vor Einbringung in den Ofenschacht experimentell ermittelt werden.

8. Verfahren nach einem der Ansprüche 1 bis 7, **dadurch gekennzeichnet, dass** das Treibmittel Wasser umfasst, welches Wasser im sandkornförmigen, mineralischen Material gebunden ist.

9. Verfahren nach einem der Ansprüche 1 bis 8, **dadurch gekennzeichnet, dass** nach Erreichen der zweiten Temperatur, die Wärmezufuhr zum geblähten Granulat derart geregelt wird, dass sich die Temperatur des geblähten Granulats nicht weiter erhöht.

10. Geblähtes Granulat aus sandkornförmigem, mineralischem Material, beispielsweise ein geblähtes Granulat aus Perlitsand, welches geblähte Granulat durch ein Verfahren nach einem der Ansprüche 1 bis 9 erhältlich ist.

11. Verwendung des geblähten Granulats nach Anspruch 10 als mineralischer Füllstoff in einem Bitumenprodukt.

## Geänderte Patentansprüche

### Geänderte Patentansprüche gemäss Regel 137(2) EPÜ.

1. Verfahren zur Herstellung eines geblähten Granulats aus sandkornförmigem, mineralischem Material, welches ein gebundenes Treibmittel aufweist, beispielsweise eines geblähten Granulats aus Perlitsand, wobei das sandkornförmige, mineralische Material
- in eine Aufgabeöffnung an einem Ende eines Ofenschachts eingebracht wird,
- in einer Förderrichtung entlang einer Wärmebehandlungsstrecke, vorzugsweise durch Schwerkraft, befördert wird,
- während des Beförderns durch die Wärmebehandlungsstrecke auf eine kritische Temperatur erhitzt wird, ab welcher das sandkornförmige, mineralische Material plastisch wird und aufgrund des Treibmittels zu blähen beginnt,
- und das geblähte Granulat an einem anderen Ende des Ofenschachts ausgetragen wird,
**dadurch gekennzeichnet, dass**
das sandkornförmige, mineralische Material nach dem Erhitzen auf die kritische Temperatur auf eine zweite Temperatur oberhalb der kritischen Temperatur erhitzt wird, welche zweite Temperatur unterhalb einer dritten Temperatur liegt, ab welcher dritten Temperatur die Oberfläche des geblähten Granulats aufplatzt und wobei die zweite Temperatur in Abhängigkeit von einer gewünschten Dichte des geblähten Granulats gewählt wird.

2. Verfahren nach Anspruch 1, **dadurch gekennzeichnet, dass** das sandkornförmige, mineralische Material nach dem Einbringen in den Ofenschacht zur Vorbereitung auf den Blähvorgang zunächst auf eine unterhalb der kritischen Temperatur liegende Vorwärmtemperatur vorgewärmt wird, vorzugsweise höchstens auf 750°C vorgewärmt wird.

3. Verfahren nach Anspruch 2, **dadurch gekennzeichnet, dass** eine Dauer bis zur Erreichung der Vorwärmtemperatur zwischen 0,5 und 1,5 Sekunden, vorzugsweise zwischen 0,5 und 2 Sekunden, besonders bevorzugt zwischen 0,5 und 3 Sekunden, beträgt.

4. Verfahren nach Anspruch 1, wobei die Wärmebehandlungsstrecke Heizelemente zur Abgabe von Wärme an das sandkornförmige, mineralische Material aufweist, **dadurch gekennzeichnet, dass** die Ansteuerung von innerhalb von zumindest 1m, bevorzugt innerhalb von zumindest 2,5m, besonders bevorzugt von innerhalb von zumindest 4m, gemessen ab der Aufgabeöffnung, angeordneten Heizelementen mit einer Anspeisetemperatur von höchstens 750°C erfolgt.

5. Verfahren nach Anspruch 4, **dadurch gekennzeichnet, dass** die Ansteuerung der in Förderrichtung nach den mittels Anspeisetemperatur angesteuerten Heizelementen liegenden Heizelementen mit einer Temperatur erfolgt, die über der Anspeisetemperatur liegt, vorzugsweise zwischen 800°C und 1100°C.

6. Verfahren nach einem der Ansprüche 1 bis 5, **dadurch gekennzeichnet, dass** die zweite Temperatur in einem Bereich zwischen der kritischen Temperatur und der 1,5fachen oder der 1,4fachen oder der 1,3fachen oder der 1,2fachen oder der 1,1fachen kritischen Temperatur, liegt.

7. Verfahren nach einem der Ansprüche 1 bis 6, **dadurch gekennzeichnet, dass** die erste Temperatur und/oder die kritische Temperatur und/oder die dritte Temperatur vor Einbringung in den Ofenschacht experimentell ermittelt werden.

8. Verfahren nach einem der Ansprüche 1 bis 7, **dadurch gekennzeichnet, dass** das Treibmittel Wasser umfasst, welches Wasser im sandkornförmigen, mineralischen Material gebunden ist.

9. Verfahren nach einem der Ansprüche 1 bis 8, **dadurch gekennzeichnet, dass** nach Erreichen der zweiten Temperatur, die Wärmezufuhr zum geblähten Granulat derart geregelt wird, dass sich die Temperatur des geblähten Granulats nicht weiter erhöht.

10. Verwendung des geblähten Granulats, welches geblähte Granulat durch ein Verfahren nach einem der Ansprüche 1 bis 9 erhältlich ist, als mineralischer Füllstoff in einem Bitumenprodukt.
